# EUROPÄISCHE PATENTSCHRIFT

(11) **EP 0 828 892 B1**
(45) Veröffentlichungstag und Bekanntmachung des Hinweises auf die Patenterteilung: **12.01.2000**
(21) Anmeldenummer: 96917394.7
(22) Anmeldetag: 22.05.1996
(51) Int. Cl.: E01C 5/06

(54) **FORMSTEIN, INSBESONDERE AUS BETON**
MOULDED BLOCK, IN PARTICULAR MADE OF CONCRETE
PIECE MOULEE EN PARTICULIER EN BETON

(30) Priorität: 24.05.1995 DE 19519001; 10.08.1995 DE 19529378
(43) Veröffentlichungstag der Anmeldung: 18.03.1998
(73) Patentinhaber: Scheiwiller, Rolf, CH-6052 Hergiswil (CH)
(72) Erfinder: Scheiwiller, Rolf, CH-6052 Hergiswil (CH)
(74) Vertreter: Otten, Herbert
(86) Internationale Anmeldenummer: EP9602187
(87) Internationale Veröffentlichungsnummer: WO9637657

(56) Entgegenhaltungen:
- EP-A- 0 095 141
- EP-A- 0 504 536
- WO-A-91/05111
- DE-A- 2 252 425
- DE-A- 3 743 035
- DE-U- 7 244 548

## Beschreibung

Die Erfindung betrifft einen Formstein, insbesondere aus Beton, nach dem Oberbegriff des Anspruchs 1.

Mit zunehmender Überbauungsdichte wird das Ableiten von Regenwasser auf Straßen oder Plätzen, insbesondere bei Regengüssen oder großen Regenmengen, immer schwieriger. Deshalb ist man dazu übergegangen, Pflastersteine mit relativ großen Distanzhaltern und entsprechend großen Fugen zu verlegen, damit das Wasser über diese Fugen abfließen kann. Meistens werden diese Fugen zur Begrünung aufgefüllt, oder durch abgelagerten Schmutz geschlossen. Hierdurch wird der Abfluß des Wassers erschwert. Da die Pflastersteine in der Regel auf einem stark verdichteten Unterbau verlegt werden, um spätere Verwerfungen zu vermeiden, sind die Sickereigenschaften durch einen derartig verdichteten Unterbau ebenfalls herabgesetzt.

Mit der EP-A-05 04 536 wiederum ist ein Formstein bekannt geworden, der an seiner Unterseite Rillen aufweist, die in verlegtem Zustand Wasseraufnahmekanäle bilden. Von der Oberseite, d. h. von der Trittseite des Pflastersteins kann das Wasser in bekannter Weise durch zwischen den Steinen mittels Abstandhaltern gewährleistete Fugen in diese Regenrillen abfließen. Ein Belag mit derartigen Pflastersteinen weist somit eine gewisse Wasserspeicherkapazität oberhalb des Unterbaus auf. Diese Speicherkapazität dient gewissermaßen als Puffer zur Aufnahme einer großen, insbesondere plötzlich auftretenden Wassermenge, zum Beispiel bei Wolkenbrüchen, die anschließend langsam durch den Unterbau absickern kann.

Bestimmte Weiterbildungen dieses Pflastersteins weisen zusätzlich an den Seitenwänden Nuten auf, die die Trittfläche des Pflastersteinbelags direkt mit den unterhalb der Steine befindlichen Wasserkanälen verbinden.

Die bekannten Entwässerungssteine können einen gewissen Verschmutzungseffekt der in die Steine eingearbeiteten Wasserkanäle bei längerem Gebrauch nicht ganz vermeiden. Um die Kanäle wieder funktionsfähig zu machen, müssen einzelne Steine ggf. angehoben werden, damit die Wasserkanäle mit einer geeigneten Saugmaschine abgesaugt werden können.

Die Erfindung hat daher die Aufgabe, einen Formstein vorzusehen, bei dem die Reinigungsintervalle der Wasserkanäle deutlich vergrößert werden oder gar vollständig entfallen können.

Dies wird ausgehend von einem Formstein der einleitend genannten Art mit Wasserablaufmitteln durch die kennzeichnenden Merkmale des Anspruchs 1 erreicht. Durch die in den Unteransprüchen aufgeführten Maßnahmen sind vorteilhafte Ausführungen und Weiterbildungen der Erfindung möglich.

Dementsprechend weist ein erfindungsgemäßer Formstein Mittel zur Bildung wenigstens einer Schmutzkehle im verlegten Zustand mit wenigstens einer seitlichen Überlaufschwelle auf. In einer derartigen Schmutzkehle kann sich Schmutz, der in der Regel schwerer als Wasser ist, absetzen und sich insbesondere als Sediment am Boden der Schmutzkehle ablagern. Das so gereinigte Wasser läuft seitlich über die Überlaufschwelle ab und gelangt durch entsprechende Wasserablaufmittel an die Unterseite des Formsteins, der seinerseits die bekannten Staukanäle oder Ablaufkanäle aufweist.

Vorzugsweise umfassen die Mittel zur Bildung einer Schmutzkehle wenigstens einen Seitenbacken des Formsteins. Ein derartiger Seitenbacken kann so wie bislang die Abstandshalter ohne großen Aufwand bei der Fertigung des Formsteins in diesen eingeformt werden.

Die zu bildende Schmutzkehle kann in einer besonderen Ausführungsform durch die Oberseite eines einzigen Seitenbackens eines erfindungsgemäßen Formsteins gebildet werden. Die vom Formstein abgewandte seitliche Begrenzung dieser Schmutzkehle wird in diesem Fall von einer plan anstoßenden Seitenwand eines benachbarten Formsteins gebildet. In einer Weiterbildung dieser Ausführung kann die Schmutzkehle auch aus zwei gleichgeformten Seitenbacken zweier Formsteine mit plan aufeinanderstoßenden Stoßseiten beider Seitenbacken gebildet werden. Die Breite der Schmutzkehle in verlegtem Zustand verdoppelt sich hierbei.

In einer weiteren vorteilhaften Ausführungsform werden ein oder mehrere Seitenbacken des Formsteins so ausgebildet, daß sich beim Aneinanderfügen mit einem weiteren Formstein zum einen eine erfindungsgemäße Schmutzkehle an der Oberseite der zusammengefügten Seitenbacken ergibt und andererseits die Seitenbacken verzahnend ineinandergreifen. Durch diese Verzahnung ergibt sich beim Verlegen ein stabiler Pflastersteinverband, indem die einzelnen Formsteine gegen seitliche Verschiebungen gesichert sind. Ein derartiger Pflastersteinverband kann erheblich größeren Belastungen ausgesetzt werden.

In einer anderen gleichermaßen vorteilhaften Ausführungsform wird die Schmutzkehle jedoch in die obere Seite des Formsteins eingearbeitet. Dies hat wiederum den Vorteil, daß Schmutzkehlen in beliebiger Zahl und beliebiger Form in den Formstein eingearbeitet werden können.

In vorteilhafter Weiterbildung der Erfindung wird die Schmutzkehle so in den Formstein eingearbeitet, daß die Überlaufschwelle unterhalb der Trittfläche liegt. Auf diese Weise wird die Trittfläche nicht von dem in der Schmutzkehle angestauten Wasser beeinträchtigt. Sie wird schnell entwässert, ohne daß Oberflächenpfützen oder dergleichen auftreten.

Erfindungsgemäße Schmutzkehlen werden bevorzugt schlitzförmig ausgebildet. Die schlitzförmige Ausbildung hat den Vorteil, daß die Trittfläche nicht zu sehr unterbrochen wird und somit gut begehbar bleibt. Andererseits jedoch weist eine langgestreckte schlitzförmige Schmutzkehle noch genügend Volumen auf, um eine erfindungsgemäße Schmutzablagerung aufnehmen zu können.

Die Schmutzkehle kann eine rund geformte oder eine eckig geformte Oberfläche aufweisen. Auch gemischte Ausgestaltungen beider Formen sind möglich.

In einer besonderen Ausführungsform werden wenigstens zwei Schmutzkehlen vorgesehen, wobei die Überlaufschwelle einer oberen Schmutzkehle oberhalb einer unteren Schmutzkehle liegt. Diese Ausführungsform bietet gewissermaßen zwei Stufen der Schmutzablagerungen, so daß der Reinigungsgrad des Ablaufwassers weiter verbessert wird. Zunächst gelangt das ablaufende Wasser in die obere Schmutzkehle, in der der größte Teil der im Wasser enthaltenen Schwebeteilchen abgelagert wird. Das über die Überlaufschwelle gelangende Wasser fließt sodann in die untere Schmutzkehle, wo ein weiterer Ablagerungsvorgang stattfinden kann, falls noch ein gewisser Anteil an Schwebeteilchen im ablaufenden Wasser vorhanden ist. Das Wasser läuft in einer solchen Ausgestaltung sozusagen kaskadenförmig ab.

Eine besondere Ausführung einer solchen Kaskadenanordnung weist quer zueinander verlaufende obere bzw. untere Schmutzkehlen auf.

Die Schmutzablagerungen in den Schmutzkehlen können von oben, d. h. von Seiten der Trittfläche aus, mit entsprechenden Absauggeräten abgesaugt werden. Falls diese Reinigung regelmäßig vorgenommen wird, d. h. bevor die Schmutzkehlen zugesetzt sind, gelangt nur relativ sauberes Wasser in die Wasserkanäle. Bei zu großen Absaugintervallen oder bei längerer Betriebsdauer kann es dennoch zu Ablagerungen in den Wasserkanälen kommen. Hierbei empfiehlt es sich, Absaugöffnungen im Pflasterbelag vorzusehen, über den die Wasserkanäle gereinigt werden können. Derartige Absaugöffnungen können beispielsweise in Form von Nuten in den Seitenwänden benachbarter Steine eines Steinverbands gebildet werden. Diese Nuten werden so angeordnet, daß sie bei verlegten Steinen gegenüberliegen und so eine Absaugöffnung nach unten bilden. Diese Absaugöffnungen enden dann in den Wasserkanälen, die durch Halbrillen oder ganze Rillen an der Unterseite des Pflastersteinverbands gebildet werden.

Um zu vermeiden, daß Kies aus dem Unterbau durch in den Wasserkanälen stehendes oder fließendes Wasser aufgeschwemmt wird, können die Wasserkanäle auch von der Unterseite des Steins beabstandet in diesen eingearbeitet werden. Die Wasserkanäle werden in diesem Fall durch Schlitze oder Ablaufbohrungen mit dem Unterbau verbunden, so daß das darin befindliche Wasser langsam nach unten durch diese Ablauföffnungen absickern kann.

In einer weiteren besonderen Ausführungsform können zusätzlich Mittel zum Verzahnen benachbarter Steine vorgesehen werden, die in die oben genannten gegenüberliegenden Nuten einzuführen sind. Eine derartige Verzahnung mit zusätzlichen Verzahnungsmitteln ist im übrigen auch unabhängig von den geschilderten Entwässerungsmitteln und Schmutzkehlen bei beliebigen Formen von Formsteinen verwendbar, wobei in diesem Fall eigene Verzahnungsnuten angebracht werden müssen.

Für die Verzahnung ist es vorteilhaft, die Verzahnungsnuten im Querschnitt von oben nach unten hin abnehmend auszugestalten. Auf diese Weise läßt sich ein Verzahnungskörper, der von oben in die Verzahnungsnuten eingesteckt wird, wenigstens teilweise fest an die Seitenwandung der Verzahnungsnuten andrücken. Hierzu wird vorteilhafterweise der Querschnitt des Verzahnungskörpers an die Form der Verzahnungsnuten angepaßt.

Ein solcher Verzahnungskörper kann ebenso wie die Formsteine aus Beton gefertigt werden. Vorteilhaft ist jedoch auch ein Einsatz von in gewissem Umfang elastischem Material wie Hartgummi. Dies bedingt eine gewisse Beweglichkeit des Pflastersteinverbands in sich. Durch diese Beweglichkeit kann bei bestimmten Belastungen das Auftreten von Brüchen innerhalb der Formsteine verhindert werden. Vorzugsweise wird ein solcher Verzahnungskörper mit einem Zugmittel zum Herausziehen aus den Verzahnungsnuten versehen. Im einfachsten Fall kann ein solches Zugmittel aus einer Bohrung bestehen, in die ein entsprechendes Werkzeug eingeführt und verspannt wird.

Ein erfindungsgemäßer Formstein mit Schmutzkehle eignet sich auch zur Bildung eines Formsteinkanals. Ein solcher Kanal umfaßt in der Regel einen trogartigen Kanalstein, auf den ein Deckel mit Wasserablaufmitteln gelegt wird. Solche Deckel sind vielfach in Form von Metallgitterrosten bekannt. Ein solcher Gitterrost kann auch durch einen Betonformstein mit Wasserablaufmitteln ersetzt werden. Mit einem Formstein sind solche Kanäle, zum Beispiel an einem Straßenrand abzudecken, wobei sich ein Deckelstein optisch an die umgebenden Pflasterbeläge anpaßt. Auch bei quer über Straßen oder Wege verlaufenden Abflußkanälen ist die Verwendung eines Deckelsteins vorteilhaft, da dieser beispielsweise mit seiner Oberseite so geformt werden kann, daß sich spürbare Schwellen zum Beispiel als Signal zur Tempoverlangsamung, einbauen lassen.

Zwar sind als Deckelstein für solche Kanäle verschiedene Ausführungsformen denkbar, wobei für die Funktion als Deckelstein lediglich Wasserablaufmittel vorgesehen sein müssen, jedoch bietet ein erfindungsgemäß mit Schmutzkehlen versehener Deckelstein auch für einen solchen Formsteinkanal die erfindungsgemäßen Vorteile, so daß auch ein solcher Kanal seltener oder gar nicht gereinigt werden muß.

Verschiedene Ausführungsbeispiele der Erfindung sind in der Zeichnung dargestellt und werden anhand der nachfolgenden Beschreibung näher erläutert.

Im einzelnen zeigen
- Fig. 1: einen erfindungsgemäßen Formstein in perspektivischer Darstellung,
- Fig. 2: eine Weiterbildung eines erfindungsgemäßen Formsteins in perspektivischer Darstellung,
- Fig. 3: eine zusätzliche Weiterbildung eines erfindungsgemäßen Formsteins,
- Fig. 4: eine besondere Ausführungsform eines erfindungsgemäßen Formsteins,

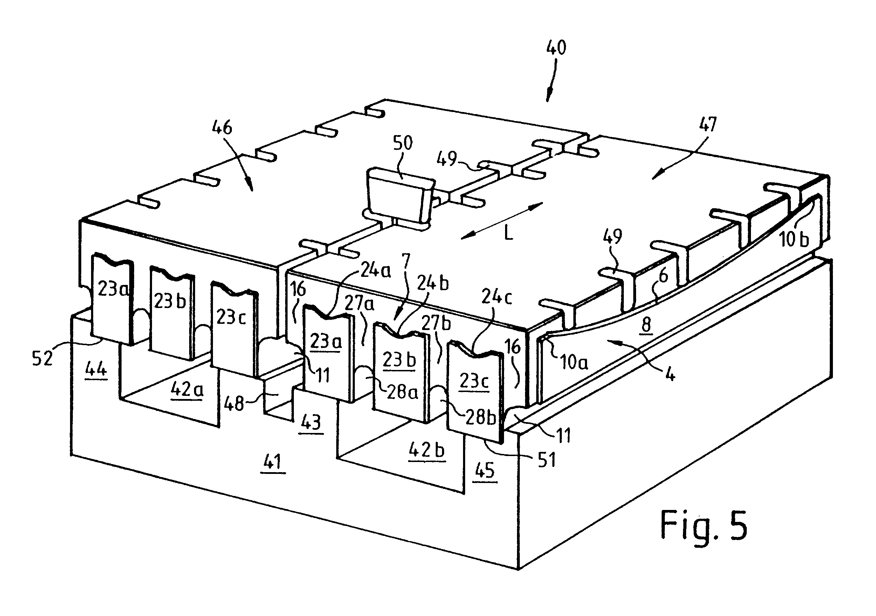

- Fig. 5: eine Darstellung der Verwendung eines erfindungsgemäßen Formsteins als Deckel für einen Kanalstein,
- Fig. 6: eine Seitenansicht eines weiteren Ausführungsbeispiels eines erfindungsgemäßen Formsteins,
- Fig. 7: die Darstellung eines Ausschnitts zweier benachbarter Formsteine gemäß Fig. 6 in einem Pflastersteinbelag in der Draufsicht,
- Fig. 8 u. Fig. 9: die Darstellung entsprechend den Figuren 6 und 7 eines weiteren Ausführungsbeispiels und
- Fig. 10 u. Fig. 11: wiederum ein weiteres Ausführungsbeispiel in einer Darstellung entsprechend den Figuren 6 und 7.

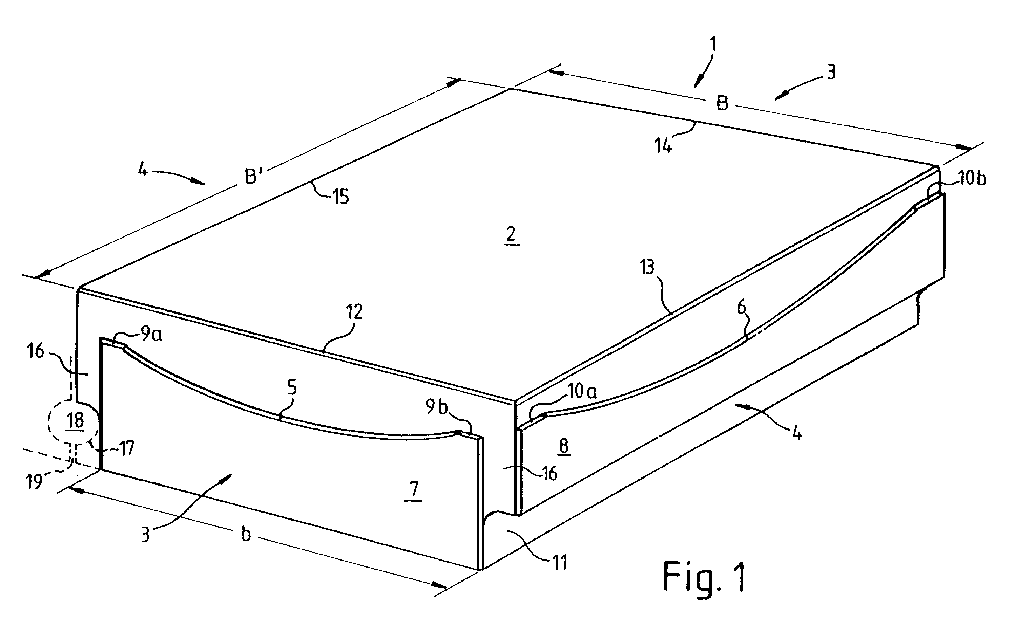

Der Formstein 1 gemäß Figur 1 weist eine im wesentlichen rechtwinklige Grundform auf. Seine Trittfläche 2 ist dementsprechend eben und rechtwinklig ausgebildet. Die beiden sichtbaren Seitenwände 3 und 4 sind mit je einer Schmutzkehle 5 und 6 versehen, die an die Oberseite jeweils eines Seitenbackens 7 bzw. 8 des Formstein 1 eingearbeitet sind. Die Schmutzkehlen 5, 6 sind rund verlaufend ausgebildet und weisen an ihren beiden Enden jeweils zwei ebene Überlaufschwellen 9 a, b bzw. 10 a, b auf. Unterhalb des einen Seitenbackens 8 ist eine halbe Rille 11 (Halbrille) entlang der Seitenwand 4 in den Formstein 1 eingearbeitet. Diese halben Rillen 11 bilden beim Aneinanderlegen mehrere erfindungsgemäßen Steine 1 u-förmige Wasserkanäle als "Ganzrillen" zur Aufnahme und Speicherung von Regenwasser, wie dies aus der EP-A-0504 536 prinzipiell bekannt ist.

Dieses Wasser, das zunächst auf der Trittfläche 2 anfällt, läuft über die Seitenkanten 12, 13, 14, 15 von der Trittfläche 2 ab. Hierzu befinden sich zwischen diesen beiden Kanten 12 bis 15 auf der Höhe der Trittfläche 2 entsprechende Fugen, da die rundum angebrachten Seitenbacken 7, 8 auch als Distanz- bzw. Abstandshalter zwischen einzelnen Pflastersteinen 1 dienen. In diesen Fugen kann das Wasser nach unten ablaufen, bis es größtenteils auf die Schmutzkehlen 5, 6 trifft. In diesen hohlen Schmutzkehlen 5, 6 staut sich das Wasser zunächst an, bis der Wasserspiegel oberhalb der Überlaufschwellen 9 a, b, 10 a, b liegt. Es bildet sich also in jeder Schmutzkehle 5, 6 gewissermaßen eine kleine Pfütze, in der das Wasser steht. In diesem stehenden Wasser kann sich Schmutz, der aus Schwebeteilchen besteht, die schwerer als Wasser sind, nach unten ablagern. Das Wasser, das über die Überlaufschwellen 9 a, b, 10 a, b abläuft, ist somit verhältnismäßig rein. Da jeder Seitenbacken 7 auf einander gegenüberliegenden Seiten 3 des Formsteins 1 sich nicht über die gesamte Breite B der Trittfläche 2 erstreckt, sondern sich auf die schmalere Breite b zwischen den beiden Halbrillen 11 beschränkt, entstehen seitlich von jedem Seitenbacken 7 schmale Ablauföffnungen 16, in die die Überlaufschwellen 9 a, b, 10 a, b münden. Durch diese Überlauföffnungen 16 gelangt das vorgereinigte Regenwasser somit in die durch die Halbrillen 11 gebildeten Wasserkanäle. Die Seitenbacken 8 an den Seitenflächen 4 können sich über die gesamte Breite B' erstrecken, da die zugehörigen Überlaufschwellen 10 a, b an die Überlauföffnung 16 angrenzen. Es kann jedoch auch eine verkürzte Breite dieser Seitenbacken 8 gewählt werden, um an dieser Seitenwandung eigene Überlauföffnungen nach unten zur Halbrille 11 zu bilden.

Zur Vermeidung von Aufschwemmungen des Unterbaus, der in der Regel aus Kies oder ähnlichem Material besteht, können die Halbrillen 11 auch so ausgebildet sein, wie gestrichelt als Halbrille 17 auf der der eingezeichneten Halbrille 11 gegenüberliegenden Seite dargestellt. Hierdurch ergeben sich bei aneinander gefügten Formsteinen 1 rohrförmige Wasserkanäle 18, die nur über schmale Sickerdurchlässe 19 mit dem Unterbau in Verbindung stehen.

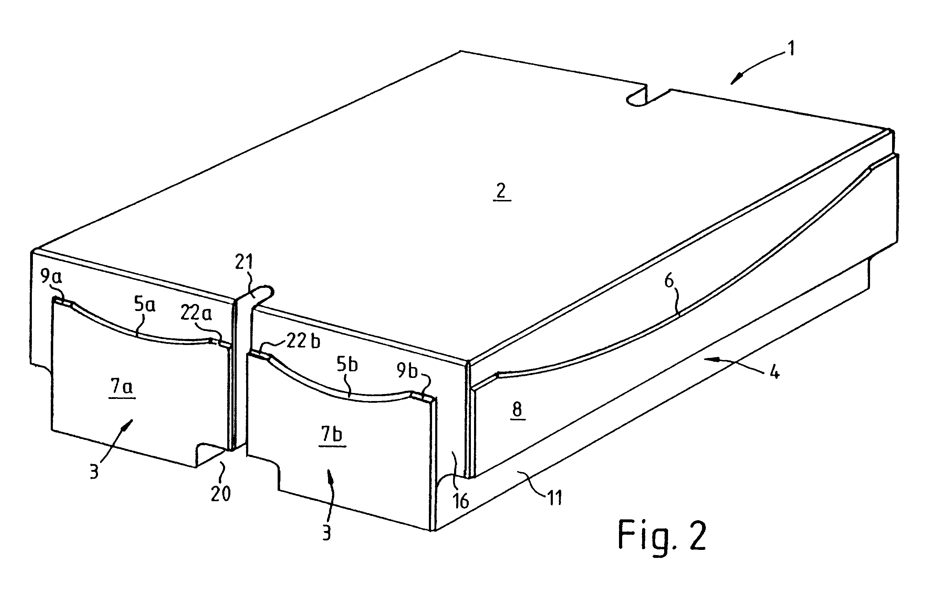

Die Ausführung gemäß Figur 2 entspricht im wesentlichen dem vorbeschriebenen Formstein 1. Abweichend hiervon ist jedoch eine weitere Rille 20 als Wasserkanal in der Mitte auf der Unterseite des Formsteins 1 eingeformt. Entlang der Seitenwand 3 des Formsteins 1 ist mittig eine Ablaufnut 21 vorgesehen, die mit dem Wasserkanal 20 in Verbindung steht. Der Seitenbacken ist in dieser Ausführungsform in zwei Hälften 7 a, b durch das Anbringen der Nut 21 aufgeteilt. Jeder dieser Teilseitenbacken 7 a, b weist auf seiner Oberseite jeweils eine Schmutzkehle 5 a, b auf. Die innere Überlaufschwelle 22 a, b beider Schmutzkehlen 5 a, b münden in die durch die Ablaufnut 21 gebildete Ablauföffnung, während die äußeren Überlauf schwellen 9 a, b weiterhin in die Ablauföffnungen 16 führen.

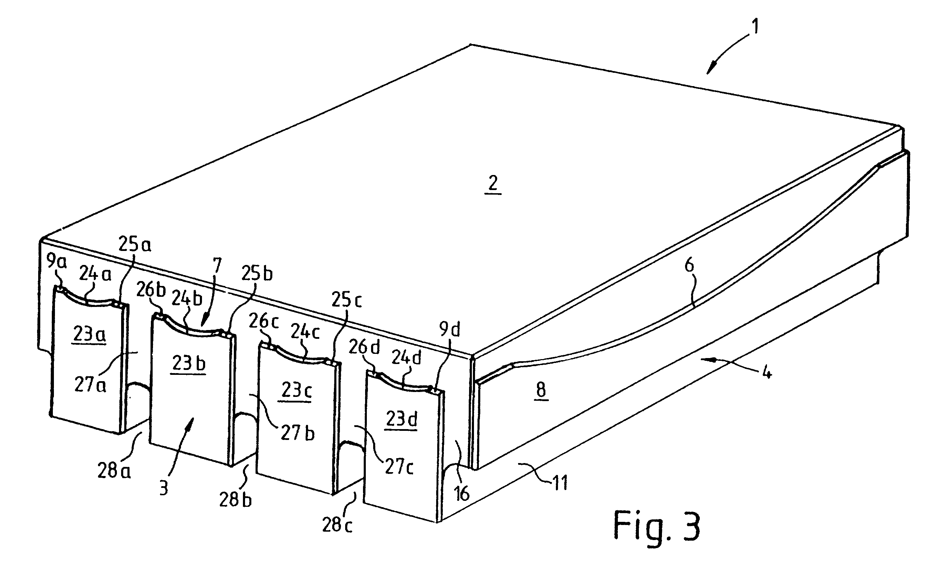

Auch die Ausführungsform gemäß Figur 3 unterscheidet sich von den vorbeschriebenen durch die Gestaltung der Seitenwand 3. Nunmehr ist der Seitenbacken 7 in vier Teilseitenbacken 23 a, b, c, d unterteilt. Jeder dieser Teilseitenbacken 23 a bis d weist eine Schmutzkehle 24 a bis d an seiner Oberseite auf. Die beiden äußeren Schmutzkehlen 24 a, 24 d münden mit ihren äußeren Überlaufschwellen 9 a, d wiederum in die Ablauföffnungen 16 der durch die Halbrillen 11 gebildeten Wasserkanäle. Die inneren Überlaufschwellen 25 a, b, c und 26 b, c, d münden in Ablauföffnungen 27 a, b, c, die ihrerseits in U-förmigen, als Rillen ausgebildeten Wasserkanälen 28 a, b, c enden.

Durch die Vielzahl von Wasserspeicherkanälen 28 a bis c bzw. 11 wird die Speicherkapazität eines aus Pflastersteinen 1 gefertigten Pflastersteinverbands deutlich erhöht.

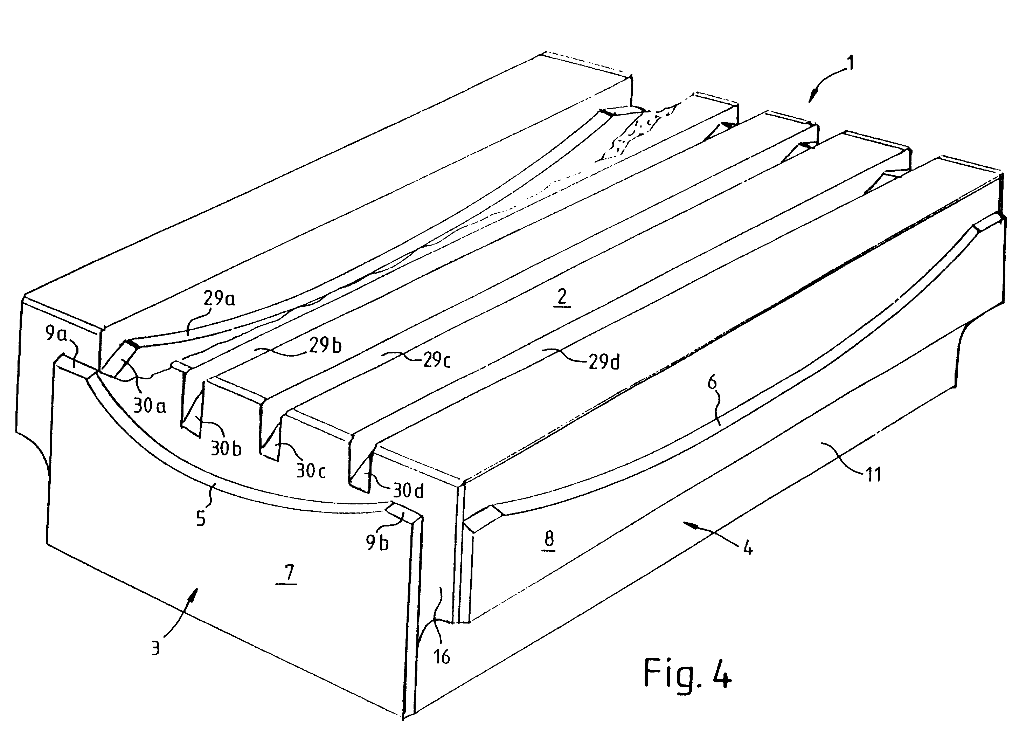

Figur 4 zeigt ein Ausführungsbeispiel mit kaskadenförmiger Hintereinanderschaltung verschiedener Schmutzkehlen. Die Seitenwand 4 des Formsteins 1 verbleibt hierbei in der bisher beschriebenen Weise. In die Trittfläche 2 jedoch sind mehrere schlitzförmige, der Seitenschmutzkehle 6 entsprechende Schmutzkehlen 29 a, b, c, d eingeformt. Die Trittfläche 2 weist somit ein streifenförmiges Muster auf. Die Überlaufschwellen 30 a bis d münden an der Seitenwand 3 des Formsteins 1 oberhalb des Seitenbackens 7 aus. Der Seitenbacken 7 weist wie bei der ersten Ausführungsform eine weitere Schmutzkehle 5 auf. In dieser Ausführungsform ist die Schmutzaufnahmekapazität durch die Vielzahl der vorhandenen Schmutzkehlen 5, 6, 29 a bis d erheblich gesteigert. Auf die Trittfläche 2 einfallendes Regenwasser läuft hierbei größtenteils in die Schlitze der Schmutzkehlen 29 a bis d ab, staut sich dort an, bis es über die Überlaufschwellen 30 a bis d reicht, und fließt sodann in die Schmutzkehlen 5. Als Schwebeteilchen vorliegender Schmutz setzt sich dabei bereits hauptsächlich in den Schmutzkehlen 29 a bis d ab. Verbleibende Schmutzteilchen können sich in der Schmutzkehle 5 absetzen, so daß das Wasser, das schließlich in den Ablauföffnungen 16 von der Schmutzkehle 5 über die Überlaufschwelle 9 a, b anlangt, weitgehend sauber von solchem Schmutz ist. Durch die vergrößerte Aufnahmekapazität für Schmutz aufgrund der Vielzahl von Schmutzkehlen können bei einem Pflastersteinverband aus derart geformten Pflastersteinen 1 die Reinigungsintervalle deutlich vergrößert sein. Selbstverständlich können die Abwasserkanalsystem 40, das als Basis einen trogförmigen Kanalstein 41 aufweist. Der Kanalstein 41 ist vorliegend als Doppeltrog mit zwei trogförmigen oder U-förmigen Rinnen 42 a, b ausgebildet. Die beiden Rinnen 42 a, b sind durch eine Auflage 43 getrennt. An den Seitenwänden 44, 45 des Kanalsteins 41 sowie auf der Auflage 43 ruhen zwei erfindungsgemäß ausgebildete Deckelsteine 46, 47. Die Deckelsteine 46, 47 entsprechen im wesentlichen dem Formstein 1 gemäß dem Ausführungsbeispiel nach Figur 3. Vorliegend ist jedoch die Seitenbacke 7 nur in drei Teilseitenbacken 23 a bis c unterteilt. Die Deckelsteine 46, 47 sind durch entsprechende Auflageschultern 51, 52 an den Seitenwänden 44, 45 des Kanalsteins 41 gegen seitliches Verschieben abgestützt. Unter den Ablaßöffnungen 27 a, b befinden sich nun die Rinnen 42 a, b. Die Aufnahmekapazität dieser Rinnen ist naturgemäß deutlich größer, als die der bisherigen Wasserkanäle 28 bzw. 11. Sie können als Wasserleitungssystem verwendet werden, wobei sie über nicht näher dargestellte Zuläufe und Abläufe verfügen. Zugleich jedoch wird die Oberseite der Deckelsteine 46, 47 über die erfindungsgemäßen Wasserablaufmittel entwässert. In der Auflage 43 ist hierzu als Ergänzung zu den Ablaufrillen 11 zusätzlich eine Aufnahmenut 48 eingearbeitet. Sämtliche Wasserkanäle 11 können auf nicht näher dargestellte Weise mit den Ablaufrinnen 42 a, b verbunden werden.

Über die bislang gezeigten Ausgestaltungen eines erfindungsgemäßen Pflastersteins 1 hinaus sind die Deckelsteine 46, 47 mit Seitennuten 49 versehen, wobei festzuhalten ist, daß diese Ausbildung nicht nur zur Verwendung in einem Abwasserkanalsystem 40 gedacht ist. Die Seitennuten 49 vergrößern das Volumen der entsprechenden Schmutzkehlen 6, so daß eine größere Menge an Wasser bzw. Schmutz in dieser Schmutzkehle 6 Platz findet, bevor das Niveau der Überlauf schwellen 10 a, b erreicht ist. Hierdurch wird wiederum die Schmutzaufnahmekapazität eines solchen Schmutzkehlen 6, so daß eine größere Menge an Wasser bzw. Schmutz in dieser Schmutzkehle 6 Platz findet, bevor das Niveau der Überlauf schwellen 10 a, b erreicht ist. Hierdurch wird wiederum die Schmutzaufnahmekapazität eines solchen Steins erhöht.

Die Seitennuten 49 können auch dazu verwendet werden, um die Steine 46, 47 gegen Verschiebungen in Längsrichtung (Doppelpfeil L) über einzutreibende Verzahnungskörper 50 zu sichern. Diese Verzahnungskörper 50, von denen beispielshaft nur einer dargestellt ist, liegen dabei zumindest teilweise an den Seitenwandungen der Seitennuten 49 an. Eine leicht konische Ausbildung des Verzahnungskörpers 50 sowie der Seitennuten 49 ermöglicht hierbei eine regelrechte Verspannung zwischen einzelnen Steinen. Der Einsatzkörper 50 kann hierbei aus dem gleichen Material wie die Steine 1, 46, 47 gefertigt sein oder aber auch aus einem eher nachgiebigem Material wie Hartgummi oder dergleichen bestehen.

Die dargestellte Methode zur Verspannung mehrerer Formsteine 1, 46, 47 ist auch unabhängig von den geschilderten Entwässerungsmaßnahmen an beliebigen Formsteinen verwendbar. Insbesondere ist eine solche Verspannung auch rundum und nicht nur an zwei gegenüberliegenden Seiten möglich. Ein vollständiger Pflastersteinbelag kann hierdurch gegen Verschiebungen in alle Richtungen gesichert werden.

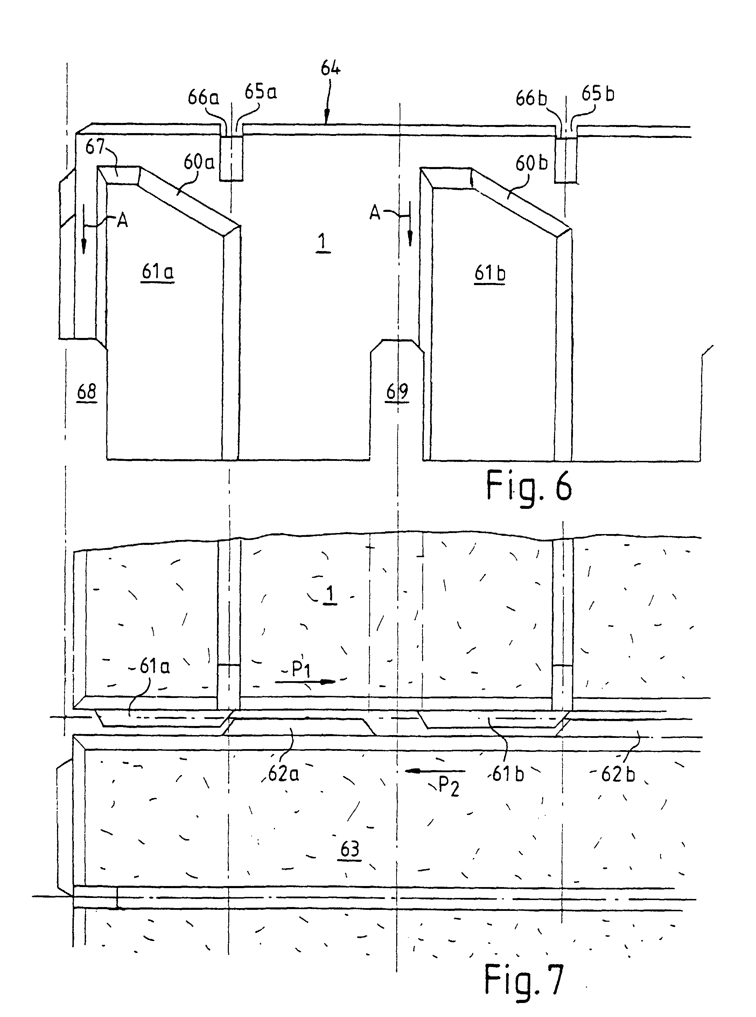

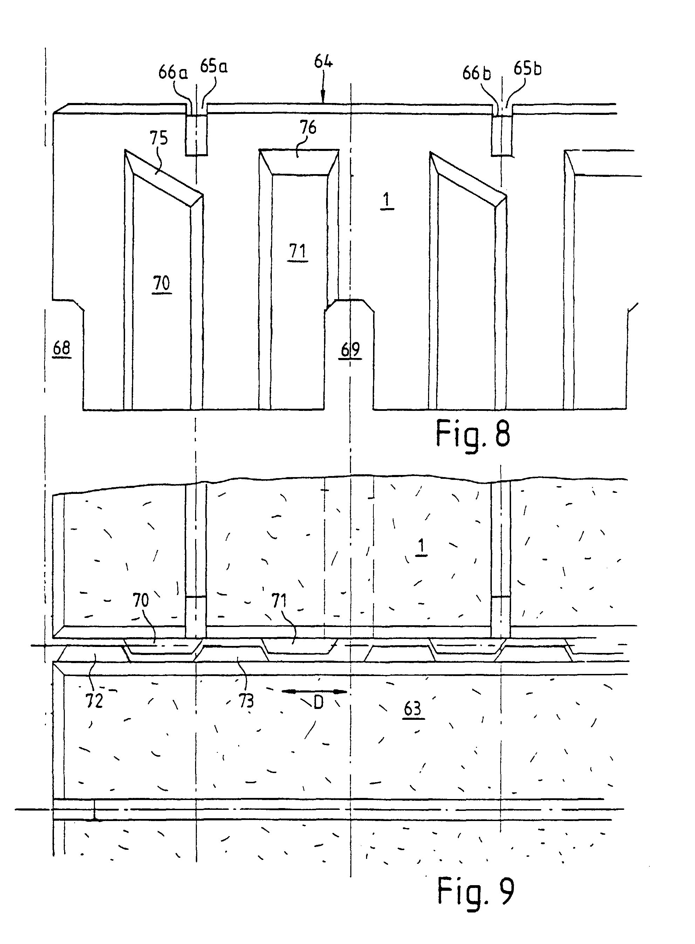

Die Darstellung gemäß Fig. 6 sowie Fig. 7 zeigt ein Ausführungsbeispiel eines Formsteins 1, bei dem sich zwei Schmutzkehlen durch die Oberflächen 60 a, b zweier Seitenbacken 61 a, b erst beim Zusammenfügen mit jeweiligen Seitenbacken 62 a, b eines Nachbarsteines 63 beim Verlegen eines Pflastersteinbelags ergeben. Dieses Ausführungsbeispiel weist zusätzlich den Vorteil auf, daß benachbarte Steine, z. B. der Formstein 1 und der Formstein 63, zumindest in einer Richtung gegen gegenseitige Verschiebungen gesichert sind. Der dargestellte Formstein 1 ist im Ausführungsbeispiel gegenüber dem Stein 63 gegen Verschiebungen in Richtung des Pfeils P1 gesichert, während der Nachbarstein 63 dementsprechend genau gegen Verschiebungen in die entgegengesetzte Richtung P2 blockiert ist. Der Anschauung halber sind in Fig. 7 die beiden benachbarten Steine 1, 63 noch nicht auf Stoß aneinandergefügt, wie dies beim Verlegen der Fall ist.

In dem dargestellten Ausführungsbeispiel ist zusätzlich zu sehen, daß zugleich auch oben in die Trittfläche 46 der Pflastersteine erfindungsgemäße Schmutzkehlen 65 a, b eingeformt sind. Die Überlaufschwellen 66 a, b dieser Schmutzkehlen 65 a, b münden in die bei der Verlegung der Steine 1, 63 durch die Seitenbacken 61 a, 61 b, 62 a, 62 b entstehenden Schmutzkehlen. Diese weisen wiederum Überlaufschwellen 67 auf, über die das abzuführende Wasser in Pfeilrichtung A nach unten in entsprechende Abwasserkanäle 68, 69 ablaufen kann.

Das Ausführungsbeispiel gemäß den Fig. 8 und 9 stellt eine Fortentwicklung gegenüber dem vorgenannten Beispiel dar. In dieser Ausführungsform wird jede Schmutzkehle bereits durch vier Seitenbacken 70, 71, 72, 73 gebildet. Jeweils zwei dieser Seitenbacken sind an dem Stein 1 bzw. dem Nachbarstein 63 angebracht. Jeweils ein Seitenbacken 70, 73 jedes benachbarten Steins 1, 63 ist oben mit einer geneigten Oberfläche 75 versehen. Die geneigten Oberflächen 75 der Seitenbacken 70 und 73 bilden beim Aneinanderfügen der beiden benachbarten Steine 1, 63 eine erfindungsgemäße Schmutzkehle. Die obere Seite 76 der beiden weiteren Seitenbacken 71, 72 bilden hierbei die seitlichen Überlauf schwellen der durch Verzahnen der Seitenbacken 70, 71, 72, 73 entstehenden Schmutzkehle. Diese Ausführungsform bietet den zusätzlichen Vorteil, daß die Nachbarsteine 1, 63 jeweils in zwei Richtungen gegen Verschiebung (Doppelpfeil D gesichert sind). In der dargestellten Form ist es dabei wie im vorgenannten Beispiel ohne weiteres möglich, Steine der jeweils identischen Form aneinanderzufügen.

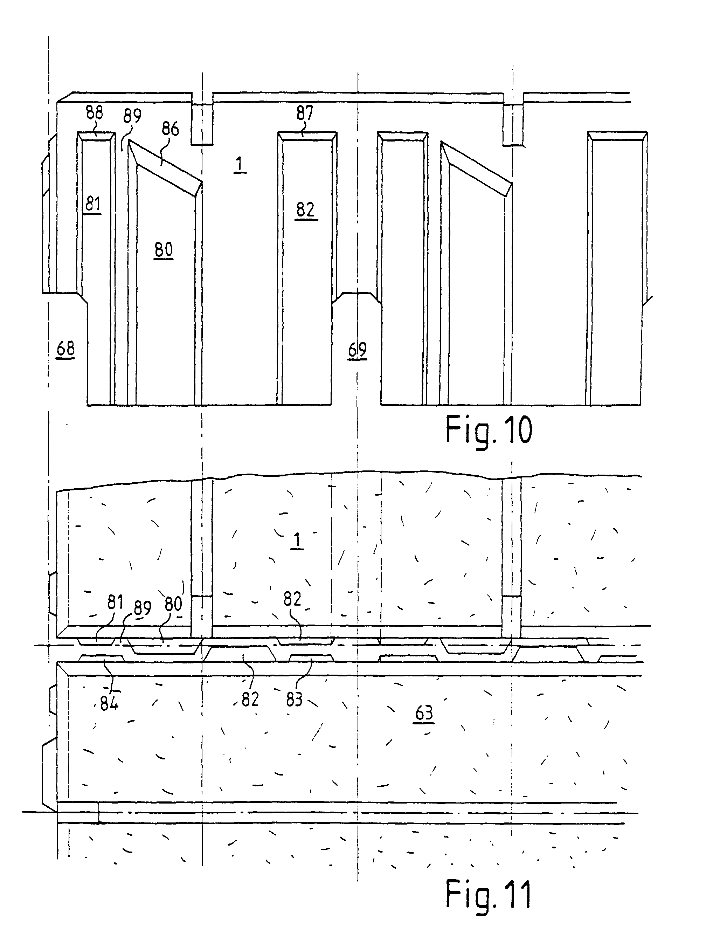

Die Figuren 10 und 11 wiederum zeigen eine Ausführungsform, bei der die erfindungsgemäßen Schmutzkehlen durch mehrere völlig verschiedenartige Seitenbackenformen gebildet werden. Der Formstein 1 weist insgesamt drei verschiedene Formen von Seitenbacken 80, 81, 82 auf. Durch Aneinanderfügen mit entsprechend komplementären Seitenbacken 82, 83, 84 des Nachbarsteins 63 ergibt sich wiederum eine erfindungsgemäße Schmutzkehle. Hierbei sind wiederum Seitenbacken 80, 82 mit schrägen Oberflächen 86 vorgesehen, die die eigentliche Schmutzkehle bilden. Die Oberseiten 87, 88 der weiteren Seitenbacken 81, 82 bzw. 84, 85 bilden wiederum Überlaufschwellen zu den Abwasserkanälen 68 bzw. 69.

Die Rille 89, die sich im vorliegenden Beispiel beim Aneinanderfügen der Steine 1, 63 bildet, kann entweder als Ablaufrille mit einem Abwasserkanal 68 verbunden werden, oder aber wie vorliegend am Unterbau des Pflastersteinbelags enden. In diesem Fall wird sich diese Rille 69 mit Feinschmutz zusetzen, so daß sich wiederum eine geschlossene Oberseite der Schmutzkehle bildet.

Wie in den vorgenannten Ausführungsbeispielen ergibt sich durch das Ineinandergreifen verschiedenster Seitenbacken 80 bis 85 eine Verzahnung der Nachbarsteine 1, 63, die diese gegen gegenläufige Verschiebungen sichert. Es ist deutlich erkennbar, daß auch bei verschiedenen Formen von Seitenbacken 80 bis 85 alle erfindungsgemäßen Vorteile erzielbar sind, wobei weiterhin jeweils identische Steine aneinanderfügbar sind.

Das vorgenannte Beispiel veranschaulicht die vielfältigen Möglichkeiten von Steinformen, mit denen eine erfindungsgemäße Schmutzkehle, gegebenenfalls auch in Verbindung mit weiteren Vorteilen, gebildet werden kann.

## Patentansprüche

1. Formstein (1), insbesondere aus Beton, für einen Pflastersteinbelag, der mit Mitteln für den Wasserablauf von einer Trittfläche (2) auf der Oberseite des Formsteins (1) nach unten versehen ist, dadurch gekennzeichnet, daß Mittel zur Bildung wenigstens einer Schmutzkehle (5, 6) in verlegtem Zustand des Formstein (1) mit wenigstens einer seitlichen Überlaufschwelle (9, 10) vorhanden sind.

2. Formstein nach Anspruch 1, dadurch gekennzeichnet, daß die Mittel zur Bildung einer Schmutzkehle (5, 6) wenigstens einen Seitenbacken (7, 8) des Formsteins 1 umfassen.

3. Formstein nach einem der vorgenannten Ansprüche, dadurch gekennzeichnet, daß der oder die Seitenbacken (61 a, b, 70, 71, 80, 81, 82) zur Bildung wenigstens einer Schmutzkehle an wenigstens einen Seitenbacken (72, 73, 82, 83, 84) eines weiteren Formsteins (63) anfügbar sind, wobei die aneinanderfügbaren Seitenbacken (61, 62, 70 bis 73, 80 bis 84) so geformt sind, daß sich im aneinandergefügten Zustand wenigstens eine Schmutzkehle ergibt.

4. Formstein nach einem der vorhergehenden Ansprüche, dadurch gekennzeichnet, daß wenigstens eine Schmutzkehle (29 a, b, c, d, 65 a, b) in die Oberseite des Formsteins eingearbeitet ist.

5. Formstein nach einem der vorhergehenden Ansprüche, dadurch gekennzeichnet, daß die Überlaufschwelle (9, 10) unterhalb der Trittfläche (2) liegt.

6. Formstein nach einem der vorhergehenden Ansprüche, dadurch gekennzeichnet, daß die Schmutzkehle (29 a, b, c, d) schlitzförmig ausgebildet ist.

7. Formstein nach einem der vorhergehenden Ansprüche, dadurch gekennzeichnet, daß die Schmutzkehle (5, 6, 29 a bis 29 d) eine rundgeformte und/oder eckiggeformte Oberfläche aufweist.

8. Formstein nach einem der vorhergehenden Ansprüche, dadurch gekennzeichnet, daß mehrere Schmutzkehlen (5, 29) vorhanden sind, wobei wenigstens eine Überlaufschwelle einer oberen Schmutzkehle (29 a bis d) über einer unteren Schmutzkehle (5) liegt.

9. Formstein nach einem der vorhergehenden Ansprüche, dadurch gekennzeichnet, daß die obere Schmutzkehle (29 a bis d) quer zur unteren Schmutzkehle (5) angeordnet ist.

10. Formstein nach einem der vorhergehenden Ansprüche, dadurch gekennzeichnet, daß wenigstens eine Absaugöffnung (21) zur Reinigung eines Wasserkanals (20) mittels einer Kehrmaschine vorhanden ist.

11. Formstein nach einem der vorhergehenden Ansprüche, dadurch gekennzeichnet, daß der oder die Wasserkanäle durch zwei Halbrillen (11, 18) benachbarter Steine eines Steinverbandes gebildet werden.

12. Formstein nach einem der vorhergehenden Ansprüche, dadurch gekennzeichnet, daß Mittel zur Verzahnung benachbarter Steine vorgesehen sind, die gegenüberliegende Ausnehmungen (49) und einen Verzahnungskörper (50) umfassen, deren Form so ausgebildet ist, daß der Verzahnungskörper (50) in eingestecktem Zustand wenigstens teilweise an der Seitenwandung der Ausnehmungen (49) anliegt.

13. Formsteinverband, dadurch gekennzeichnet, daß er Formsteine (1) nach einem der vorhergehenden Ansprüche enthält.

14. Formsteinkanal, insbesondere aus Beton, der einen trogartigen Kanalstein (41) umfaßt, dadurch gekennzeichnet, daß ein Formstein (1) nach einem der vorhergehenden Ansprüche als Deckelstein vorgesehen ist.

## Claims

1. Moulded block (1), in particular made of concrete, for a paving stone surface, which is provided with means for the drainage of water from a tread (2) on the upper side of the moulded block (1) downwards, characterised in that means are present for forming at least one dirt channel (5, 6) in the laid state of the moulded block (1) with at least one lateral overflow sill (9, 10).

2. Moulded block according to Claim 1, characterised in that means for forming a dirt channel (5, 6) comprise at least one side cheek (7, 8) of the moulded block (1).

3. Moulded block according to one of the preceding Claims, characterised in that the side cheek or cheeks (61 a, b, 70, 71, 80, 81, 82) for forming at least one dirt channel can be joined to at least one side cheek (72, 73, 82, 83, 84) of another moulded block (63), in which case the side cheeks (61, 62, 70 to 73, 80 to 84) which can be joined together are shaped so that when they are joined together at least one dirt channel results.

4. Moulded block according to one of the preceding Claims, characterised in that at least one dirt channel (29 a, b, c, d, 65 a, b) is machined in the upper side of the moulded block.

5. Moulded block according to one of the preceding Claims, characterised in that the overflow sill (9, 10) lies below the tread (2).

6. Moulded block according to one of the preceding Claims, characterised in that the dirt channel (29 a, b, c, d) is constructed in the form of a slot.

7. Moulded block according to one of the preceding Claims, characterised in that the dirt channel (5, 6, 29a to 29d) has a rounded and/or angular surface.

8. Moulded block according to one of the preceding Claims, characterised in that several dirt channels (5, 29) are present, in which case at least one overflow sill of an upper dirt channel (29 a to d) lies above a lower dirt channel (5).

9. Moulded block according to one of the preceding Claims, characterised in that the upper dirt channel (29 a to d) is arranged at right angles to the lower dirt channel (5).

10. Moulded block according to one of the preceding Claims, characterised in that at least one suction opening (21) is provided for cleaning a water channel (20) by means of a sweeper machine.

11. Moulded block according to one of the preceding Claims, characterised in that the water channel or channels is/are formed by two half grooves (11, 18) of adjacent blocks of one block formation.

12. Moulded block according to one of the preceding Claims, characterised in that means are provided for toothing adjacent blocks, which comprise opposing recesses (49) and a toothing member (50), the shape of which is constructed so that in the inserted state, the toothing member (50) bears at least partly against the side wall of the recesses (49).

13. Moulded block formation, characterised in that it contains moulded blocks (1) according to one of the preceding Claims.

14. Moulded block channel, in particular made of concrete, which comprises a trough-like channel block (41), characterised in that a moulded block (1) according to one of the preceding Claims is provided as a cover block.

## Revendications

1. Pièce moulée (1), en particulier en béton, pour un revêtement en blocs de pavage qui est pourvu vers le bas de moyens pour évacuer l'eau à partir d'une surface de marche (2) sur le côté supérieur de la pièce moulée (1),
caractérisée en ce qu'
il y a des moyens servant à former au moins une gorge pour les saletés (5, 6) quand la pièce moulée (1) est dans son état posé, avec au moins un seuil latéral de trop plein (9, 10).

2. Pièce moulée, selon la revendication 1,
caractérisée en ce que
les moyens servant à former une gorge pour les saletés (5, 6) comprennent au moins une joue latérale (7, 8) de la pièce moulée (1).

3. Pièce moulée, selon l'une des revendications précitées,
caractérisée en ce que
la ou les joues latérales (61 a, b, 70, 71, 80, 81, 82) peuvent être jointes pour former au moins une gorge pour les saletés sur au moins une joue latérale (72, 73, 82, 83, 84) d'une autre pièce moulée (63), les joues latérales (61, 62, 70 à 73, 80 à 84), que l'on peut joindre les unes aux autres, étant formées de telle sorte que l'on ait au moins une gorge pour les saletés quand les blocs sont en position jointe les uns avec les autres.

4. Pièce moulée, selon l'une des revendications précédentes,
caractérisée en ce que
l'on pratique au moins une gorge pour les saletés (29a, b, c, d, 65 a, b) dans la face supérieure de la pièce moulée.

5. Pièce moulée, selon l'une des revendications précédentes,
caractérisée en ce que
le seuil de trop plein (9, 10) se trouve en dessous de la surface de marche (2).

6. Pièce moulée, selon l'une des revendications précédentes,
caractérisée en ce que
les gorges pour les saletés (29 a, b, c, d) sont constituées en forme de fentes.

7. Pièce moulée, selon l'une des revendications précédentes,
caractérisée en ce que
les gorges pour les saletés (5, 6, 29 a à 29 d) présentent une surface de forme ronde et/ou de forme polygonale.

8. Pièce moulée, selon l'une des revendications précédentes,
caractérisée en ce que
il y a plusieurs gorges pour les saletés (5, 29), au moins un seuil de trop plein d'une gorge pour les saletés supérieure (29 a à d) se trouvant au-dessus d'une gorge pour les saletés (5) inférieure.

9. Pièce moulée, selon l'une des revendications précédentes,
caractérisée en ce que
la gorge pour les saletés supérieure (29 a à d) est disposée perpendiculairement à la gorge pour les saletés inférieure (5).

10. Pièce moulée, selon l'une des revendications précédentes,
caractérisée en ce que
il y a au moins un orifice d'aspiration (21) pour nettoyer un canal d'eau (20) au moyen d'une balayeuse.

11. Pièce moulée, selon l'une des revendications précédentes,
caractérisée en ce que
le ou les canaux d'eau sont constitués par deux demi-cannelures (11, 18) de blocs voisins d'un ensemble de blocs.

12. Pièce moulée, selon l'une des revendications précédentes,
caractérisée en ce que
des moyens sont prévus pour réaliser l'indentation de blocs voisins, moyens qui comprennent des évidements (49) se trouvant les uns en regard des autres et un corps d'indentation (50), dont la forme est constituée de telle sorte que le corps d'indentation (50) repose en position enfoncée au moins en partie sur la paroi latérale des évidements (49).

13. Ensemble de pièces moulées,
caractérisé en ce que
il contient des pièces moulées (1) selon l'une des revendications précédentes.

14. Canal de pièces moulées, en particulier en béton, qui comprend un bloc à canaux (41) en forme d'auges,
caractérisé en ce que
une pièce moulée (1) selon l'une des revendications précédentes est prévue comme bloc de couvercle.
